# FASCICULE DE BREVET EUROPEEN

(11) **EP 1 742 826 B1**
(45) Date de publication et mention de la délivrance du brevet: **26.03.2008**
(21) Numéro de dépôt: 05746733.4
(22) Date de dépôt: 08.04.2005
(51) Int. Cl.: B62D 25/08

(54) **STRUCTURE AVANT DE VEHICULE AUTOMOBILE**
FRONTSTRUKTUR EINES KRAFTFAHRZEUGES
FRONT STRUCTURE OF A MOTOR VEHICLE

(30) Priorité: 23.04.2004 FR 0450769
(43) Date de publication de la demande: 17.01.2007
(73) Titulaire: Renault SAS, 92100 Boulogne Billancourt (FR)
(72) Inventeur: SZYMANSKI, Joel, F-78340 Les Clayes sous Bois (FR); WILLEMENOT, Johann, F-92350 Le Plessis Robinson (FR)
(74) Mandataire: Guyon, Rodolphe C.
(86) Numéro de dépôt international: PCT/FR2005/050223
(87) Numéro de publication internationale: WO 2005/105552

(56) Documents cités:
- EP-A- 1 323 566
- DE-A1- 3 433 935
- US-B1- 6 260 609

## Description

La présente invention concerne les structures avant de véhicules automobiles.

Elle concerne plus particulièrement les structures comportant au moins deux bras longitudinaux, reliés par des montants verticaux à un berceau cadre qui s'étend en dessous desdits bras, une traverse de choc reliée au berceau cadre par l'intermédiaire d'au moins deux boîtiers latéraux de sorte que cette traverse est située en avant de ce berceau et sensiblement à la même hauteur, un radiateur qui s'étend dans un plan perpendiculaire aux longerons et situé entre la traverse de choc et le berceau cadre et comportant des moyens de fixation de la partie inférieure du radiateur et des moyens anti-rotation disposés entre la partie supérieure du radiateur et les bras longitudinaux.

De façon connue, la partie inférieure du radiateur est fixée par rapport à la structure avant du véhicule au moyen d'au moins deux supports qui sont soudés au berceau cadre. Les moyens anti-rotations évoqués plus haut sont eux solidaires des longerons. Un exemple de la technique antérieure est dirigée par le document EP1323566

Les normes de sécurité automobile imposent désormais que, en dessous d'une certaine vitesse de collision (par exemple 15 km/b pour les normes Danner), le berceau ne soit pas impacté. Un mode de fixation de la partie inférieure du radiateur par rapport à la structure avant du véhicule au moyen d'au moins deux supports soudés au berceau cadre est contraignant dans l'optique de ne pas impacter le berceau. En effet, le radiateur, situé entre le berceau et le pare-choc, est dans la zone d'impact et va donc subir un effort répercuté sur les supports, et ces supports vont entrer en collision avec le berceau.

La présente invention vise à répondre à cet inconvénient en proposant une structure telle que précédemment citée, caractérisé en ce que les moyens de fixation de la partie inférieure du radiateur sont solidaires de la traverse de choc.

Selon différentes caractéristiques de l'invention :
- au moins un boîtier latéral forme un moyen de fixation de la partie inférieure du radiateur.
- la traverse de choc est liée au berceau cadre par l'intermédiaire de deux boîtiers latéraux, et en ce que les moyens de fixation comportent une patte de support solidaire de la traverse de choc, cette patte étant située, dans un plan sensiblement horizontal, entre les deux boîtiers latéraux.
- la patte de support présente une face inclinée en regard du berceau, et en ce que la surface supérieure de la patte de support est sensiblement plus haute que le berceau cadre. Cette forme distincte de la patte présente l'avantage de pouvoir marquer le berceau en cas de choc dépassant ou s'approchant des limites imposées par la norme Danner.
- un boîtier latéral est un boîtier de déformation plastique qui comporte des amorces de pliage aptes à favoriser l'empilage de ce boîtier lors d'un choc subi par le véhicule, et le boîtier latéral présente une forme adaptée pour la fixation d'un élément fonctionnel du véhicule,
- le boîtier latéral présente une forme adaptée pour la fixation d'un radiateur,
- le boîtier latéral présente une surface d'appui apte à recevoir un plot de fixation,
- la surface d'appui est munie d'un orifice et de bords tombés à la périphérie de cet orifice,
- au moins un bord tombé de la surface d'appui présente un affaiblissement,
- chaque boîtier latéral est formé de deux demi-boîtiers symétriques.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'une structure avant selon l'invention,

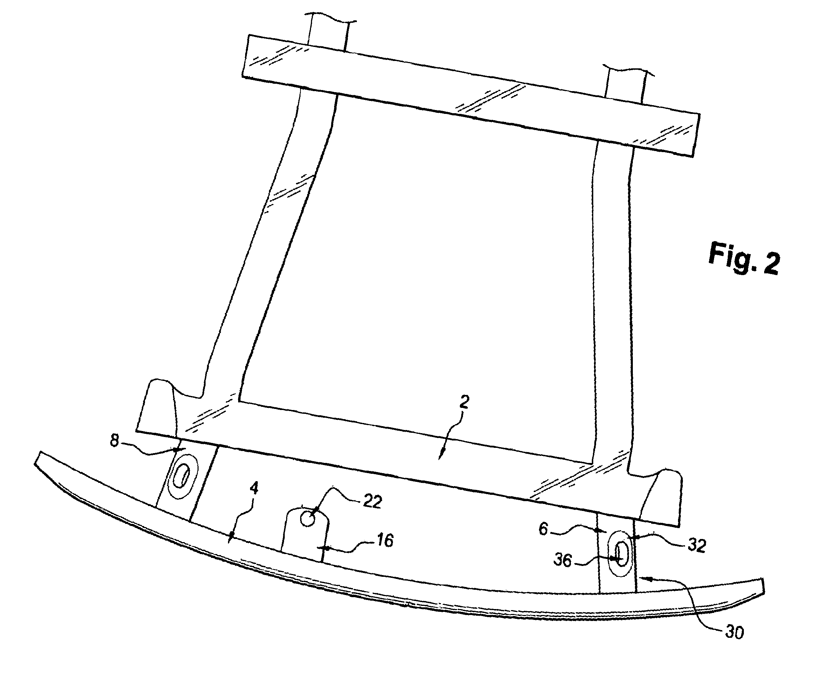

- la figure 2 est une vue de côté de la structure avant de la figure 1,
- la figure 3 est une vue de dessus d'une structure avant selon l'invention.
- la figure 4 est une vue en perspective d'une structure avant selon un autre mode de réalisation de l'invention.

Dans la description qui va suivre, on adoptera à titre non limitatif une orientation longitudinale, verticale et transversale selon l'orientation traditionnellement utilisée dans l'automobile.

Une structure avant 1 de véhicule automobile comporte de façon connue deux bras longitudinaux, reliés par des montants verticaux à un berceau cadre 2 qui s'étend en dessous desdits bras. En cas de gros chocs subis par le véhicule, ce sont ces éléments de structure qui doivent absorber l'ensemble des efforts de sorte qu'aucune intrusion ne se produise dans l'habitacle du véhicule.

De plus, une traverse de choc 4 est reliée au berceau cadre 2 par l'intermédiaire d'au moins deux boîtiers latéraux 6 et 8 de sorte que cette traverse 4 est située en avant de ce berceau 2 et sensiblement à la même hauteur. Cette traverse 4, appelée traverse Danner, et les boîtiers latéraux 6 et 8, qui sont avantageusement formés d'un boîtier de déformation plastique, sont calibrés de sorte que d'une part, ils participent à l'absorption d'énergie pour des chocs du type décrits ci dessus, et que d'autre part, ils absorbent l'intégralité du choc sans endommager le berceau 2 et/ou les bras longitudinaux, lorsque ce choc a une énergie inférieure à une norme donnée, dite norme Danner.

Pour des contraintes d'architecture, un radiateur 10 s'étend dans un plan perpendiculaire aux bras longitudinaux et est situé entre la traverse de choc 4 et le berceau cadre 2. Des moyens de fixation 12 et 14 du radiateur 10 sont prévus dans la partie inférieure du radiateur 10, et des moyens pour empêcher la rotation de ce radiateur 10 sont disposés entre la partie supérieure du radiateur 10 et les bras longitudinaux.

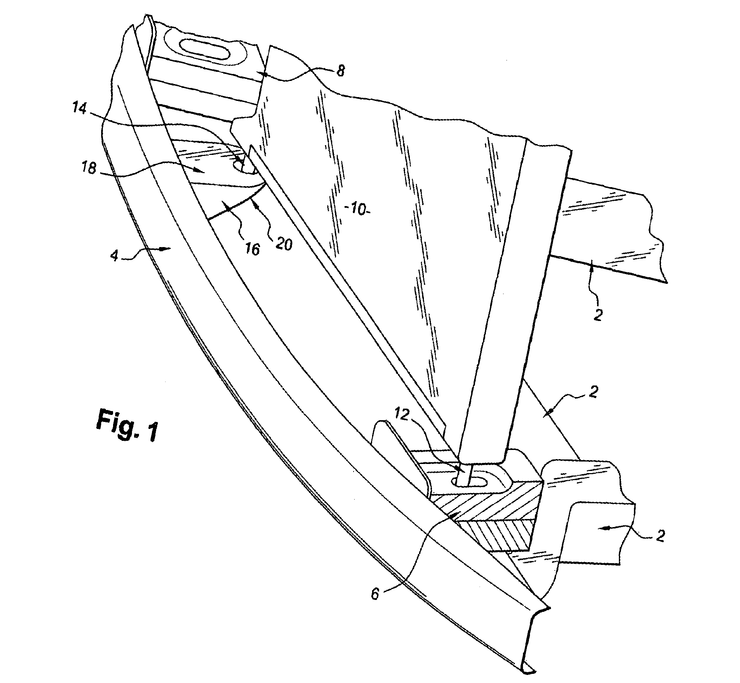

Tel que représenté à la figure 1, la fixation du radiateur 10 dans sa partie inférieure est réalisée par deux supports originaux :
■ une patte de support radial 16, qui assure une fixation du radiateur 10 à une première extrémité inférieure et qui est solidaire de la traverse de choc 4. Cette patte de support 16 est positionnée sur la traverse de choc 4 de sorte qu'elle soit située entre les deux boîtiers latéraux 6 et 8, sensiblement au milieu de cette traverse Danner 4,
■ - un support latéral 6, qui assure une fixation du radiateur 10 à une deuxième extrémité inférieure et qui est intégré dans un bottier latéral.

Le radiateur repose sur ces deux supports.

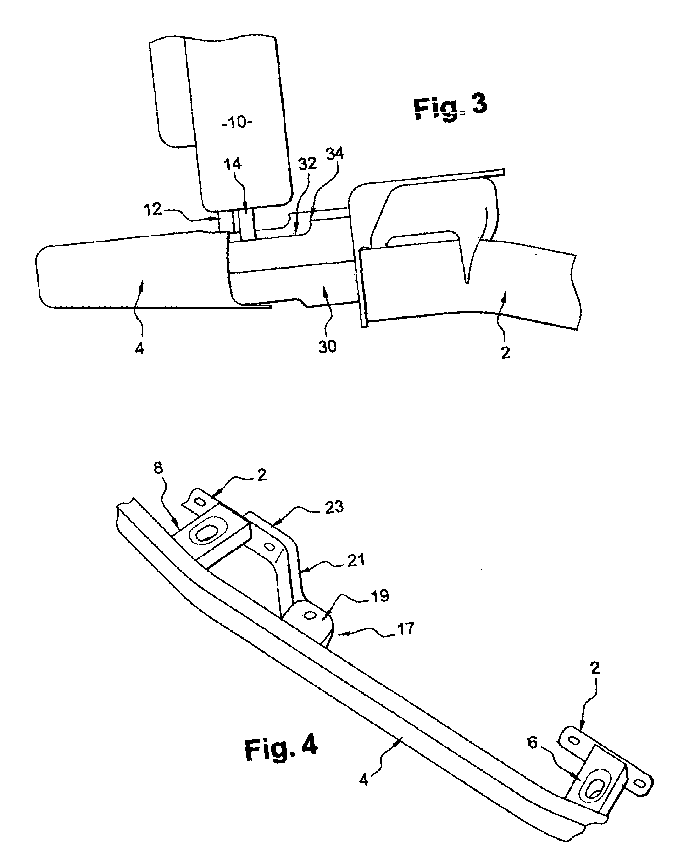

Tel que représenté aux figures 1 et 3, la patte de support radial 16 est solidaire de la traverse de choc 4, par exemple par soudage. La patte 16 est formée d'un profilé présentant d'une part une surface supérieure 18 qui s'étend vers le berceau cadre 2, et d'autre part une surface incliné 20 par rapport à la verticale qui s'étend de la partie inférieure de la traverse de choc 4 vers l'extrémité de la surface supérieure 18 de la patte 16 orientée vers le berceau cadre 2. La surface supérieure 18 de la patte 16 est munie d'un orifice 22 apte à recevoir un plot de fixation 14 solidaire de la partie inférieure du radiateur 10.

Cette patte radiale 16 et la traverse de choc 4 sur laquelle elle est solidarisée sont agencées verticalement de sorte que la surface supérieure 18 de la patte radiale 16 est située à une hauteur supérieure à celle du berceau cadre 2. Ainsi, en cas de choc plus important que ceux imposés par la norme Danner (cette norme représentant un choc équivalent à un recul de la traverse de choc 4 vers le berceau 2 sensiblement égal à 90 mm, de sorte que ce berceau 2 ne soit pas impacté), la patte de support radial 16 entre en contact avec le berceau 2 au niveau de la partie inférieure de la surface inclinée 20. Le fait que ce contact ait lieu dans la partie inférieure de la surface inclinée 20 permet de marquer suffisamment le berceau 2 pour que l'on puisse voir que la limite Danner a été dépassée et que le berceau doit être changé, mais sans générer d'effort contraire à l'absorption des chocs. Il est en effet dangereux que des efforts aient porté sur le berceau 2 sans que cela soit clair à la réparation, car le berceau 2 pourrait ne pas être changé alors qu'il est endommagé.

Selon un autre mode de réalisation, la patte de support radial présente une forme adaptée pour que la fixation du radiateur 10 ait une raideur verticale importante. Ceci permet de filtrer plus efficacement les vibrations du radiateur et d'améliorer ainsi les performances acoustiques. A cette fin, de façon analogue à la patte décrite ci dessus, une patte de support radial 17 est solidaire de la traverse de choc 4, par exemple par soudage. La patte 17 est formée d'un profilé présentant d'une part une surface supérieure 19 qui s'étend vers le berceau cadre 2, et d'autre part une surface incliné par rapport à la verticale qui s'étend de la partie inférieure de la traverse de choc 4 vers l'extrémité de la surface supérieure 19 de la patte 17 orientée vers le berceau cadre 2. La surface supérieure 19 de la patte 17 est munie d'un orifice apte à recevoir un plot de fixation 14 solidaire de la partie inférieure du radiateur 10. De plus, telle que représentée à la figure 4, la patte de support radial 17 est munie d'un levier 21 qui s'étend depuis la surface supérieure 19 vers le boîtier latéral 8 sur lequel le radiateur n'est pas fixé. Ce levier 21 prolonge ainsi la patte 17 transversalement et sensiblement vers le berceau 2, de sorte que l'extrémité 23 du levier 21 puisse être solidarisée au berceau 2 et/ou au boîtier latéral 8.

Dans une demande distincte déposée le même jour, la demanderesse a présentée une forme particulière d'un support latéral 6 apte à assurer la fixation de la partie inférieure du radiateur 10. Ainsi, ce support latéral 6 peut présenter une surface d'appui 32 pour un plot de fixation 12 du radiateur 10. Dans le sens longitudinal, de part et d'autre de cette surface d'appui 32, des bords relevés 34 proposent des amorces de pliage apte à favoriser le compactage sensiblement longitudinal des supports latéraux lors du choc. Un orifice 36 est agencé dans cette surface d'appui 32 pour permettre le passage d'un plot de fixation 12 du radiateur 10. Du fait de la faible épaisseur du matériau formant ce support latéral, un bord tombé est réalisé à la périphérie de cet orifice 36 pour permettre le guidage du plot de fixation 12. Ce bord tombé crée longitudinalement une résistance à l'empilage du support lors du choc. Un affaiblissement est réalisé dans chaque bord tombé longitudinal afin de diminuer cette résistance longitudinale.

Pour des raisons d'architecture, le trou de fixation 36 du plot 12 n'est pas centré par rapport à la surface supérieure du support latéral. Afin d'obtenir, à moindre coût, un empilage du support homogène lors du choc, et afin d'éviter que la partie inférieure du support encaisse plus de choc et se déforme moins que la partie supérieure trouée, un orifice est également réalisé dans la face inférieure du support. Une partie inférieure du support latéral symétrique à la partie supérieure par rapport au centre de ce support permet un décalage inertiel de la partie inférieure inverse à celui de la partie supérieure, ce qui assure un empilage du support homogène. Avantageusement, le support est formé de deux demi-pièces. symétriques. La demi-pièce du bas a pour unique fonction la fermeture du support. Ainsi, pour un train avant, et donc au moins deux supports latéraux, un seul type de pièce est à réaliser.

## Revendications

1. Structure avant de véhicule automobile, comportant au moins deux bras longitudinaux, reliés par des montants verticaux à un berceau cadre (2) qui s'étend en dessous desdits bras, une traverse de choc (4) reliée au berceau cadre (2) par l'intermédiaire d'au moins deux supports latéraux (6, 8) de sorte que cette traverse (4) est située en avant de ce berceau (2) et sensiblement à la même hauteur, un radiateur (10) qui s'étend dans un plan perpendiculaire aux bras longitudinaux et situé entre la traverse de choc (4) et le berceau cadre (2) et comportant des moyens de fixation (12, 14, 16) de la partie inférieure du radiateur (10) et des moyens anti-rotation disposés entre la partie supérieure du radiateur (10) et les bras longitudinaux, les moyens de fixation (12, 14, 16, 17) de la partie inférieure du radiateur (10) étant solidaires de la traverse de choc (4), **caractérisée en ce qu'**au moins un support latéral (6) forme un moyen de fixation de la partie inférieure du radiateur (10), et **en ce que** les moyens de fixation comportent une patte de support (16,17) solidaire de la traverse de choc (4), cette patte (16,17) étant située, dans un plan sensiblement horizontal, entre les deux supports latéraux (6, 8).

2. Structure selon la revendication 1, **caractérisée en ce que** la patte de support (16, 17) présente une surface inclinée (20) en regard du berceau (2), et **en ce que** la surface supérieure (18, 19) de la patte de support est sensiblement plus haute que le berceau cadre (2).

3. Structure selon l'une des revendications 1 ou 2, **caractérisée en ce que** la patte de support (17) est prolongée par un levier (21) dont une extrémité est fixée sur le berceau cadre (2).

4. Structure selon l'une des revendication 1 ou 2, **caractérisée en ce que** la patte de support (17) est prolongée par un levier (21) dont une extrémité est fixée sur un support latéral (8).

5. Structure selon l'une des revendications précédentes, **caractérisée en ce qu'**un support latéral (6) est un boîtier de déformation plastique qui comporte des amorces de pliage aptes à favoriser l'empilage de ce boîtier lors d'un choc subi par le véhicule, et **en ce que** le support latéral (6) présente une forme adaptée pour la fixation d'un élément fonctionnel (10) du véhicule.

6. Structure avant selon la revendication 5, **caractérisée en ce que** le support latéral (6) présente une forme adaptée pour la fixation d'un radiateur (10).

7. Structure selon l'une des revendications 5 ou 6, **caractérisée en ce que** chaque support latéral (6) est formé de deux demi-boîtiers symétriques.

## Claims

1. Front structure of a motor vehicle, comprising at least two longitudinal arms, connected by vertical struts to a frame cradle (2) which extends beneath said arms, an impact bar (4) connected to the frame cradle (2) by means of at least two lateral supports (6, 8) so that this bar (4) is situated in front of this cradle (2) and substantially at the same height, a radiator (10) that extends in a plane perpendicular to the longitudinal arms and situated between the impact bar (4) and the frame cradle (2) and comprising fastening means (12, 14, 16) of the bottom portion of the radiator (10) and antirotation means placed between the top portion of the radiator (10) and the longitudinal arms, the fastening means (12, 14, 16, 17) of the bottom portion of the radiator (10) being fixedly attached to the impact bar (4), **characterized in that** at least one lateral support (6) forms a fastening means of the bottom portion of the radiator (10), and **in that** the fastening means comprise a support lug (16, 17) fixedly attached to the impact bar (4), this lug (16, 17) being situated, in a substantially horizontal plane, between the two lateral supports (6, 8).

2. Structure according to Claim 1, **characterized in that** the support lug (16, 17) has an inclined surface (20) facing the cradle (2) and **in that** the top surface (18, 19) of the support lug is substantially higher than the frame cradle (2).

3. Structure according to one of Claims 1 or 2, **characterized in that** the support lug (17) is extended by a lever (21) whereof one end is fastened to the frame cradle (2).

4. Structure according to one of Claims 1 or 2, **characterized in that** the support lug (17) is extended by a lever (21) whereof one end is fastened to a lateral support (8).

5. Structure according to one of the preceding claims, **characterized in that** a lateral support (6) is a plastic deformation box which comprises incipient folding elements capable of promoting the crumpling of this box at the time of an impact sustained by the vehicle, and **in that** the lateral support (6) has a shape suitable for the fastening of a functional element (10) of the vehicle.

6. Front structure according to Claim 5, **characterized in that** the lateral support (6) has a shape suitable for the fastening of a radiator (10).

7. Front structure according to one of Claims 5 or 6, **characterized in that** each lateral support (6) is formed of two symmetrical half-boxes.

## Patentansprüche

1. Frontstruktur eines Kraftfahrzeugs, die mindestens zwei Längsarme, die durch senkrechte Säulen mit einer Rahmenhalterung (2) verbunden sind, die sich unter den Armen erstreckt, einen Stoßquerträger (4), der mit der Rahmenhalterung (2) über mindestens zwei seitliche Träger (6, 8) so verbunden ist, dass dieser Querträger (4) sich vor dieser Halterung (2) und im Wesentlichen auf gleicher Höhe befindet, einen Kühler (10), der sich in einer Ebene lotrecht zu den Längsarmen erstreckt und sich zwischen dem Stoßquerträger (4) und der Rahmenhalterung (2) befindet, und Befestigungsmittel (12, 14, 16) des unteren Teils des Kühlers (10) und Drehverhinderungsmittel aufweist, die zwischen dem oberen Teil des Kühlers (10) und den Längsarmen angeordnet sind, wobei die Befestigungsmittel (12, 14, 16, 17) des unteren Teils des Kühlers (10) fest mit dem Stoßquerträger (4) verbunden sind, **dadurch gekennzeichnet, dass** mindestens ein seitlicher Träger (6) ein Befestigungsmittel des unteren Teils des Kühlers (10) bildet, und dass die Befestigungsmittel eine Trägerlasche (16, 17) aufweisen, die fest mit dem Stoßquerträger (4) verbunden ist, wobei diese Lasche (16, 17) sich in einer im Wesentlichen waagrechten Ebene zwischen den zwei seitlichen Trägern (6, 8) befindet.

2. Struktur nach Anspruch 1, **dadurch gekennzeichnet, dass** die Trägerlasche (16, 17) eine geneigte Fläche (20) gegenüber der Halterung (2) aufweist, und dass die Oberfläche (18, 19) der Trägerlasche wesentlich höher ist als die Rahmenhalterung (2).

3. Struktur nach einem der Ansprüche 1 oder 2, **dadurch gekennzeichnet, dass** die Trägerlasche (17) von einem Hebel (21) verlängert wird, von dem ein Ende an der Rahmenhalterung (2) befestigt ist.

4. Struktur nach einem der Ansprüche 1 oder 2, **dadurch gekennzeichnet, dass** die Trägerlasche (17) von einem Hebel (21) verlängert wird, von dem ein Ende an einem seitlichen Träger (8) befestigt ist.

5. Struktur nach einem der vorhergehenden Ansprüche, **dadurch gekennzeichnet, dass** ein seitlicher Träger (6) ein Gehäuse mit plastischer Verformung ist, das Faltansätze aufweist, die das Stapeln dieses Gehäuses bei einem von dem Fahrzeug erfahrenen Stoß aufweist, und dass der seitliche Träger (6) eine Form hat, die für die Befestigung eines Funktionselements (10) des Fahrzeugs geeignet ist.

6. Frontstruktur nach Anspruch 5, **dadurch gekennzeichnet, dass** der seitliche Träger (6) eine Form aufweist, die für die Befestigung eines Kühlers (10) geeignet ist.

7. Struktur nach einem der Ansprüche 5 oder 6, **dadurch gekennzeichnet, dass** jeder seitliche Träger (6) von zwei symmetrischen Halbgehäusen gebildet wird.
